(19) Europäisches Patentamt
European Patent Office
Office européen des brevets

(11) **EP 2 814 018 A1**

(12) **EUROPEAN PATENT APPLICATION**
published in accordance with Art. 153(4) EPC

(43) Date of publication:
**17.12.2014 Bulletin 2014/51**

(51) Int Cl.:
***G08G 1/16*** *(2006.01)*

(21) Application number: **12868170.7**

(86) International application number:
**PCT/JP2012/053160**

(22) Date of filing: **10.02.2012**

(87) International publication number:
**WO 2013/118301 (15.08.2013 Gazette 2013/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Toyota Jidosha Kabushiki Kaisha Toyota-shi, Aichi 471-8571 (JP)**

(72) Inventors:
• **TAKAHASHI, Yoshihiko**
**Toyota-shi**
**Aichi 471-8571 (JP)**

• **KAWASAKI, Tomoya**
**Toyota-shi**
**Aichi 471-8571 (JP)**
• **KOMOGUCHI, Tetsuya**
**Toyota-shi**
**Aichi 471-8571 (JP)**

(74) Representative: **Winter, Brandl, Fürniss, Hübner, Röss, Kaiser, Polte - Partnerschaft mbB Patent- und Rechtsanwaltskanzlei Bavariaring 10 80336 München (DE)**

(54) **WARNING DEVICE**

(57)    A purpose of the present invention is to provide a warning device, usability of which is improved.

The warning device includes: a first detection section for detecting another vehicle that approaches from right rear of a host vehicle; a second detection section for detecting another vehicle that approaches from left rear of the host vehicle; a warning section for issuing a warning to inform a driver of the host vehicle of approach of another vehicle; and a control section for ordering the warning section to issue the warning when another vehicle is detected by the first detection section or the second detection section. In a case where a first other vehicle is detected by one of the first detection section and the second detection section and where a second other vehicle is detected thereafter by the other one of the first detection section and the second detection section when the host vehicle is reversed from a parked state, the control section extends issuance of the warning of the first vehicle for a specified time.

FIG. 1

EP 2 814 018 A1

**Description**

TECHNICAL FIELD

The present invention relates to a warning device.

BACKGROUND ART

Conventionally, a vehicle radar system that includes a beam forming circuit and a beam combining circuit has been available. In this vehicle radar system, the beam forming circuit provides a plurality of antenna beams to a plurality of beam ports. The beam combining circuit receives the plurality of antenna beams from the beam forming circuit and combines these antenna beams to create the desired number of antenna beams. In the desired number of antenna beams created by the beam combining circuit, each of first and second beams at both ends has a narrower width than that of an intermediate beam (see Patent Document 1, for example).

PRIOR ART DOCUMENT

PATENT DOCUMENT

Patent Document 1: Japanese Patent Application Publication No. 2006-191610 (JP 2006-191610 A)

SUMMARY OF THE INVENTION

PROBLEM TO BE SOLVED BY THE INVENTION

When another vehicle is parked next to a host vehicle, or when there is a wall of a building or the like on a side of the host vehicle, multipath is reflected by another vehicle or the wall. Thus, when the conventional vehicle radar system is used for a warning device, there is a case where the device detects approach of the one other vehicle as approach of two other vehicles that approach from different directions due to the multipath.
In other words, for example, when a first other vehicle passes the rear of the host vehicle from a left side to a right side, there is a case where the second other vehicle that passes the rear of the host vehicle from the right side to the left side is detected due to the multipath reflected by another vehicle or the wall that is next to the host vehicle. In this case, the second other vehicle is a non-existent vehicle and thus is a ghost by false detection.
In this case, the second vehicle detected as the ghost is detected as a vehicle that satisfies a condition such as a same speed as the first other vehicle, a specified time difference by the multipath, an arrival direction that is substantially and linearly symmetrical to a center axis of the host vehicle, or the like.
However, when an actual second other vehicle that satisfies the same condition as the ghost exists, it is difficult to distinguish the actual vehicle from the ghost, and this may worsen usability of the warning device.
Therefore, a purpose is to provide a warning device, usability of which is improved.

MEANS FOR SOLVING THE PROBLEM

A warning device of an embodiment of the present invention includes: a first detection section for detecting another vehicle approaching from right rear of a host vehicle; a second detection section for detecting another vehicle approaching from left rear of the host vehicle; a warning section for issuing a warning to inform a driver of the host vehicle of approach of another vehicle; and a control section for ordering the warning section to issue the warning when the first detection section or the second detection section detects another vehicle. The control section extends issuance of the warning of a first other vehicle for a specified time in a case where one of the first detection section and the second detection section detects the first other vehicle and another of the first detection section and the second detection section thereafter detects a second other vehicle when the host vehicle is reversed from a parked state.

EFFECT OF THE INVENTION

It is possible to provide a warning device, usability of which is improved.

BRIEF DESCRIPTION OF THE DRAWINGS

[FIG. 1] FIG. 1 is a block diagram for showing a warning device 100 of an embodiment.
[FIG. 2] FIG. 2 is a view for showing installation positions of millimeter-wave radar systems 10R, 10L, which are included in the warning device 100 of the embodiment, in a host vehicle 60 and detectable areas 11R, 11L.
[FIG. 3] FIG. 3 shows an example of detection areas 12R, 12L that are set by an ECU 30R when the host vehicle 60 is reversed from a state that the vehicle is parked perpendicular to a traveling lane.
[FIG. 4A] FIG. 4A is a view for showing a state of detecting another vehicle 71 that approaches from a left side at the rear of the host vehicle 60 in which a warning device of a comparative example is installed.
[FIG. 4B] FIG. 4B is a view for detecting another vehicle 72 that approaches from a right side at the rear of the host vehicle 60 in which the warning device of the comparative example is installed.
[FIG. 5] FIG. 5 is a view for showing a state that another vehicle 71 approaches from the left side at the rear in a state that another vehicle 73 is parked on the right of the host vehicle 60 in which the warning device of the comparative example is installed.

[FIG. 6A] FIG. 6A is a view for showing a functional block that is included in an ECU 30R of the warning device of the embodiment.

[FIG. 6B] FIG. 6B is a view for showing a functional block that is included in an ECU 30L of the warning device of the embodiment.

[FIG. 7] FIG. 7 is a view for showing a warning line that is used for calculation of an estimated crossing time.

[FIG. 8] FIG. 8 is a flowchart for illustrating processing that is executed by the ECU 30R of the warning device of the embodiment.

[FIG. 9A] FIG. 9A is a timing chart for showing an operation to extend a warning by the warning device 100 of the embodiment.

[FIG. 9B] FIG. 9B is a timing chart for showing the operation to extend the warning by the warning device 100 of the embodiment.

[FIG. 10] FIG. 10 is a timing chart for showing the operation to extend the warning by the warning device of a modified example of the embodiment.

MODES FOR CARRYING OUT THE INVENTION

A description will hereinafter be made on an embodiment to which a warning device of the present invention is applied.

<Embodiment>

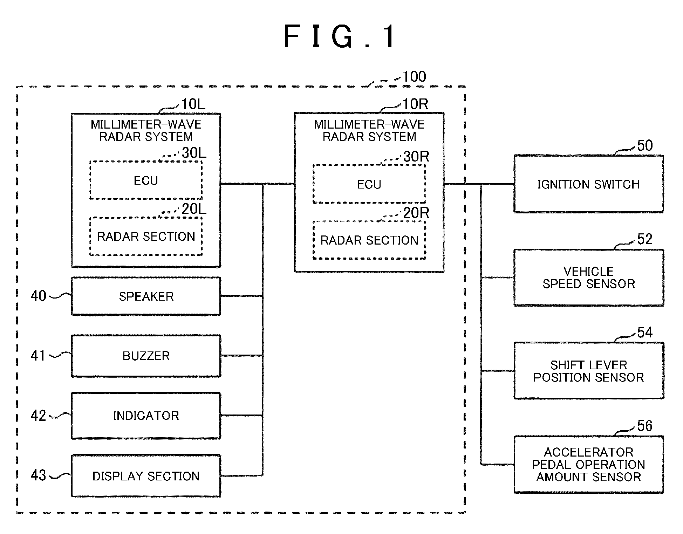

FIG. 1 is a block diagram for showing a warning device 100 of the embodiment.

The warning device 100 includes millimeter-wave radar systems 10R, 10L, a speaker 40, a buzzer 41, an indicator 42, and a display device 43 as main components.

The millimeter-wave radar system 10R includes a radar section 20R and an electronic control unit (ECU) 30R. In addition, the millimeter-wave radar system 10L includes a radar section 20L and an ECU 30L.

The millimeter-wave radar systems 10R, 10L are ECU-integrated radar systems respectively including the radar sections 20R, 20L and the ECUs 30R, 30L, and have a same configuration.

The ECU-integrated millimeter-wave radar systems 10R, 10L are adapted such that one of them functions as a master system and the other functions as a local system depending on a way to connect a connection pin. In the embodiment, a mode in which the millimeter-wave radar system 10R is used as the master system and the millimeter-wave radar system 10L is used as the local system will be described.

FIG. 1 illustrates the mode in which the millimeter-wave radar system 10R is used as the master system and the millimeter-wave radar system 10L is used as the local system; however, the millimeter-wave radar system 10L may be used as the master system, and the millimeter-wave radar system 10R may be used as the local system. In this case, in FIG. 1, the millimeter-wave radar system 10R and the millimeter-wave radar system 10L may be switched, and the ECU 30L that is embedded in the millimeter-wave radar system 10L may be used as an ECU that performs overall control of the warning device 100.

In the embodiment, the ECU 30R is the ECU that performs the overall control of the warning device 100 and serves as an example of a control section of the warning device 100 of the embodiment.

The ECU 30R of the millimeter-wave radar system 10R is connected to the ECU 30L, the buzzer 41, the indicator 42, the display device 43, an ignition switch 50, a vehicle speed sensor 52, a shift lever position sensor 54, and an accelerator pedal operation amount sensor 56 by a control area network (CAN), for example.

Here, a description will be made on a mode in which the ECU-integrated millimeter-wave radar systems 10R, 10L are used; however, each of the millimeter-wave radar systems 10R, 10L may be a radar system that does not include the ECU. In this case, an ECU may be used that receives detection signals from the radar sections 20R, 20L and is connected to the buzzer 41, the indicator 42, the display device 43, the ignition switch 50, the vehicle speed sensor 52, the shift lever position sensor 54, and the accelerator pedal operation amount sensor 56.

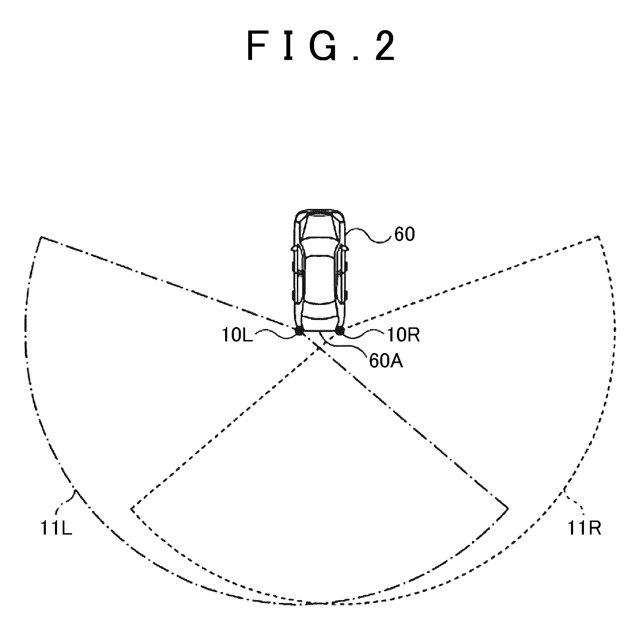

FIG. 2 is a view for showing installation positions of the millimeter-wave radar systems 10R, 10L, which are included in the warning device 100 of the embodiment, in a host vehicle 60, and detectable areas 11R, 11L.

The millimeter-wave radar system 10R is attached to a right corner of a rear end 60A of the host vehicle 60. Meanwhile, the millimeter-wave radar system 10L is attached to a left corner of the rear end 60A of the host vehicle 60. The millimeter-wave radar systems 10R, 10L are, for example, attached to side members in the rear of the host vehicle 60 or attached to an inner side of a rear bumper of the host vehicle 60.

Here, a description will be made on a mode in which the millimeter-wave radar systems 10R, 10L are respectively attached to the right corner and the left corner of the rear end 60A of the host vehicle 60. However, the millimeter-wave radar systems 10R, 10L may respectively be attached to rear portions on a right side and a left side of the host vehicle 60 or may respectively be attached to a right end side of the rear end 60A and a left end side of the rear of the host vehicle 60.

The millimeter-wave radar systems 10R, 10L each causes an electromagnetic wave to permeate the bumper, which is formed of a resin or the like, and be radiated to the right rear and the left rear of the vehicle, and detects a reflected wave, so as to detect a position, a moving direction, a speed of another vehicle or an obstacle at the right rear or the left rear of the vehicle. The radar section 20R is an example of the first detection section for detecting another vehicle that approaches from the right rear of the vehicle by using radar, and the radar section 20L is an example of the second detection section for detecting another vehicle approaching from the left rear of the vehicle by using the radar.

The millimeter-wave radar systems 10R, 10L respectively have the detectable areas 11R, 11L that are shown in FIG. 2.

The detectable area 11R that is indicated by a dashed line is a fan-shaped area having an angle of approximately 170° from the right side to the rear with the right corner in the rear portion of the host vehicle 60 being a center. The detectable area 11L that is indicated by a chain line is a fan-shaped area having an angle of approximately 170° from the left side to the rear with the left corner in the rear portion of the host vehicle 60 being a center.

The warning device 100 may detect another vehicle in an entire area that is covered by the detectable areas 11R, 11L that are shown in FIG. 2 or may detect another vehicle in a portion of the area.

Various methods have already been known for calculating the position, the moving direction, the speed, and the like in the millimeter-wave radar systems 10R, 10L, and a frequency modulated continuous wave (FM-CW) method or digital beam forming (DBF) can be used, for example. A brief description will be made on these methods below.

First, the millimeter-wave radar systems 10R, 10L each generates a modulation signal in which a triangular wave is modulated, outputs a transmission signal that is modulated to increase or lower a frequency according to a gradient of the triangular wave, and generates a beat signal for which a portion of the transmission signal is mixed with respect to a received signal.

The millimeter-wave radar systems 10R, 10L each performs Fast Fourier Transform (FFT) processing or the like on the beat signal in each of an up section and a down section of a modulation cycle to generate frequency spectrum data, and searches a peak frequency at which reception wave intensity forms a peak from the frequency spectrum data.

The millimeter-wave radar systems 10R, 10L each obtains a distance D from the obstacle and a relative speed V from equations (1) to (6).

If the frequency of the beat signal when the relative speed between the host vehicle and the obstacle is zero is set to fr, a Doppler frequency based on the relative speed is set to fd, a beat frequency in a section where the frequency is increased (the up section) is set to fb1, and the beat frequency in a section where the frequency is lowered (the down section) is set to fb2, the following equations (1), (2) are established.

Accordingly, fr and fd can be obtained by the following equations (3) (4) if the beat frequencies fb1 and fb2 in the up section and the down section of the modulation cycle are separately measured. Then, once fr and fd are obtained, the distance D and the relative speed V between the host vehicle 60 and the obstacle can be obtained by the following equations (5) (6).

Here, C represents the speed of light, fm represents a repetition frequency of the triangular wave as a source of the transmission signal, $\Delta F$ represents a frequency shift width, and $f_0$ represents a center frequency of a modulation wave.

$$fb1 = fr - fd \ldots (1)$$

$$fb2 = fr + fd \ldots (2)$$

$$fr = (fb1 + fb2)/2 \ldots (3)$$

$$fd = (fb1 - fb2)/2 \ldots (4)$$

$$D = (C/ (4 \bullet \Delta F \bullet fm)) \bullet fr \ldots (5)$$

$$V = (C/ (2 \bullet f_0)) \bullet fd \ldots (6)$$

In addition, an orientation of the obstacle can be calculated by the DBF. If a radio wave that arrives from a direction of an angle $\theta$ with respect to a direction of the center axis of the millimeter-wave radar systems 10R, 10L is received by an array antenna that includes element antennas #1, #2, #3 ... that are arranged at intervals d, a propagation path length of the radio wave in the element antenna #2 is longer than the propagation path length thereof in the element antenna #1 by d $\sin\theta$.

Accordingly, a phase of the radio wave that is received by the element antenna #2 is delayed from the phase of the radio wave that is received by the element antenna #1 by $(2\pi d \sin\theta)/\lambda$. Here, $\lambda$ represents a wavelength of the radio wave. If this delay is corrected by a phase shifter, the radio wave from a $\theta$ direction is received in the same phase by both of the element antennas, and thus directivity is set in the $\theta$ direction.

The DBF is a technique to create the directivity of the antenna by converting the phase and amplitude and by combining the reception wave of the each antenna element on the basis of such principles. Accordingly, the millimeter-wave radar systems 10R, 10L can obtain an orientation $\theta$ of the obstacle.

Once the distance D, the relative speed V, and the orientation $\theta$ are calculated as described above, the millimeter-wave radar systems 10R, 10L can calculate the position of the obstacle with a specified position of the host vehicle as a reference, the moving direction of the obstacle with the center axis (that is, a traveling direction) of the host vehicle as a reference, a moving speed of the obstacle, and the like.

As for the moving direction, a difference in a relative position in a fine period can be calculated, or a speed vector can be calculated with the relative speed V, an orientation angle $\theta$, and the speed of the host vehicle as parameters.

In addition, the millimeter-wave radar systems 10R, 10L screen (sieve) the obstacles whose positions, moving directions, speeds, and the like have been calculated as described above on conditions of the reception wave intensity, the estimated size, the speed, and the like, thereby extracting a vehicle from the obstacles.

Accordingly, the millimeter-wave radar systems 10R, 10L can obtain the position of another vehicle at the right rear or the left rear of the host vehicle, the moving direction thereof with the center axis of the host vehicle as the reference, the speed thereof, and the like. A description will hereinafter be made on the embodiment based on the premise of such a technique.

As means for obtaining information such as the position, the speed, and the like of another vehicle, a laser radar system, a quasi-millimeter-wave radar system, or the like may be used instead of the millimeter-wave radar systems 10R, 10L. In addition, the position, the speed, and the like of another vehicle may be calculated by a method that does not use the Doppler effect.

The speaker 40, the buzzer 41, the indicator 42, and the display device 43 that are shown in FIG. 1 are, for example, examples of the warning section that issues a warning.

The speaker 40 is a speaker that is disposed in a cabin of the host vehicle and outputs a warning sound. The speaker 40 may also serve as a speaker that outputs audio and voice of a navigation system, or an exclusive speaker may be used for generating the warning sound of the warning device 100 of the embodiment, for example.

The indicator 42 is attached to an inner mirror, an outer mirror, a combination meter, or the like and is turned on or blinked when the warning is issued. The display device 43 is a display section of the navigation system, for example, and turns on or blinks an icon, or the like when the warning is issued. The indicator 42 or the display device 43 may adopt a mode capable of indicating a right or left direction by an arrow or the like when another vehicle is detected, so as to allow the driver to recognize the arrival direction of another vehicle.

The ECU 30R is a computer unit that includes a CPU as its center as well as a ROM, a RAM, and the like that are interconnected via a bus, for example, and also includes memories such as a hard disc drive (HDD) and an electrically erasable and programmable read only memory (EEPROM), an I/O port, a timer, a counter, and the like.

In addition, the ECU 30R receives output signals from switches and sensors such as the ignition switch 50, the vehicle speed sensor 52, the shift lever position sensor 54, the accelerator pedal operation amount sensor 56, and the like, or a status signal or the like that is output by the other ECU for controlling the vehicle by using these output signals.

The ECU 30R actuates the millimeter-wave radar systems 10R, 10L when the host vehicle is reversed from a parked state, outputs the warning sound from the speaker 40, and displays the warning that indicates the approach of another vehicle on the buzzer 41, the indicator 42, and the display device 43 when another vehicle that is detected by the millimeter-wave radar systems 10R, 10L is in a detection area on the right rear side or left rear side of the vehicle.

Whether the host vehicle is in the "parked state" can be determined by setting such a condition that an ACC off signal is input from the ignition switch 50, that a signal input from the shift lever position sensor 54 indicates "P" (parking), and the like, for example. In this case, a condition that a vehicle speed signal that is input from the vehicle speed sensor 52 immediately before the ignition switch 50 is turned off is zero may be added to the above condition.

Whether the host vehicle is "reversed" can be determined by setting such a condition that a signal input from the shift lever position sensor 54 indicates "R" (reverse) after a period of the above "parked state", or the like.

These conditions that are set are not limited to have the above contents. Thus, some of the conditions may be canceled, or another condition may be added.

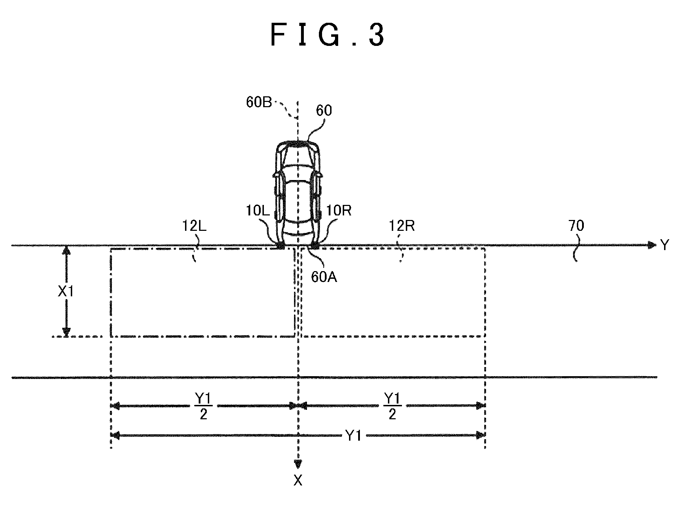

FIG. 3 shows an example of detection areas 12R, 12L that are set by the ECU 30R when the host vehicle 60 is reversed from a state that it is parked perpendicular to a traveling lane. The detection areas 12R, 12L are areas in the detectable areas 11R, 11L shown in FIG. 2 that are used by the warning device 100 to detect another vehicle, and are set by the ECU 30R. In FIG. 3, the detection area 12R is indicated by a dashed line, and the detection area 12L is indicated by a chain line.

Here, an X-axis with a rear direction of the host vehicle 60 being a positive direction and a Y-axis that is orthogonal to the X-axis at the rear end 60A of the host vehicle 60 are defined on a center axis 60B of the host vehicle 60. A positive direction of the Y-axis is on the right side in FIG. 3. A border between the detection area 12R and the detection area 12L is on the center axis 60B.

As shown in FIG. 3, when the host vehicle 60 starts being reversed in a +X-axis direction in a state that the host vehicle 60 is parked to face forward in a -X direction while being orthogonal to a traveling lane 70, an area that is a sum of the detection areas 12R, 12L corresponds to an area having a width X1 in the positive direction of the X-axis from the rear end 60A of the host vehicle 60 and a width Y1 on both right and left sides from the center axis 60B. Of the area, the detection area 12R is an area that is on the right side of the center axis 60B and has a width Y1/2, and the detection area 12L is an area that is on the left side of the center axis 60B and has a width Y1/2.

The detection area 12R is an area that is located at the right rear of the host vehicle 60 and detected by the millimeter-wave radar system 10R as the first detection section. The detection area 12L is an area that is located at the left rear of the host vehicle 60 and detected by the millimeter-wave radar system 10L as the second detection section.

Here, the traveling lane 70 may be a traveling lane in a parking lot of a store or the like, for example, or may be a road.

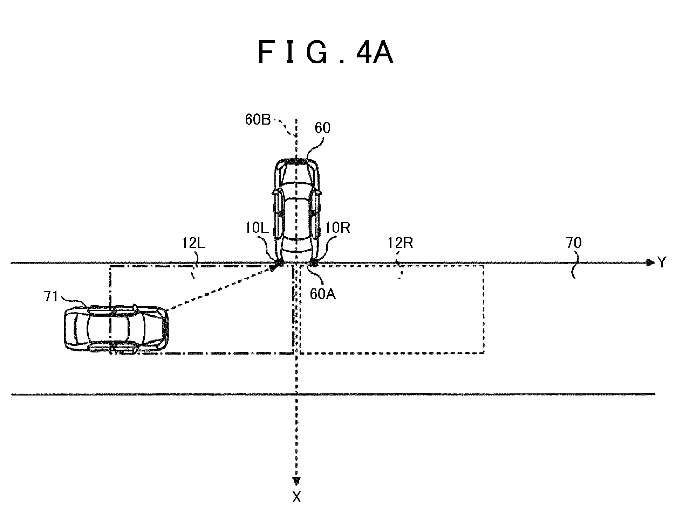

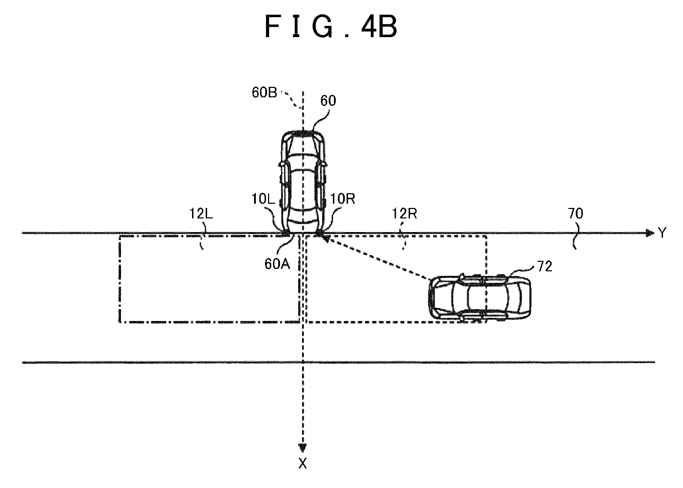

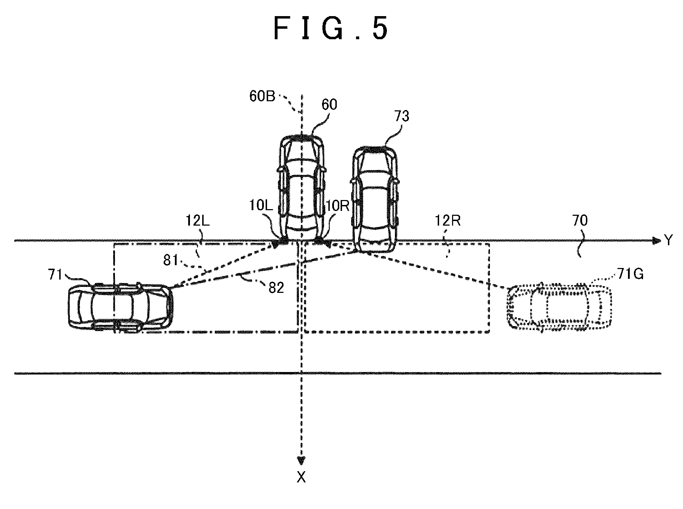

Next, before the ECU 30R of the warning device 100 of the embodiment is described, a description will be made on detection of another vehicle at the rear of the host vehicle 60 by a warning device of a comparative example by using FIG. 4A, FIG. 4B, and FIG. 5. In FIG. 4A, FIG. 4B, and FIG. 5, a description will be made on an assumption that the warning device of the comparative example is installed in the host vehicle 60.

Although the warning device of the comparative example has a same configuration as the warning device 100 of the embodiment shown in FIG. 1, it is different from the warning device 100 of the embodiment in a point that a problem shown in FIG. 5 is raised.

FIG. 4A is a view for showing a state of detecting another vehicle 71 that approaches from the left side at the rear of the host vehicle 60 in which the warning device of the comparative example is installed. FIG. 4B is a view for detecting another vehicle 72 that approaches from the right side at the rear of the host vehicle 60 in which the warning device of the comparative example is installed. FIG. 5 is a view for showing a state that another vehicle 71 approaches from the left rear in a state that another vehicle 73 is parked on the right of the host vehicle 60 in which the warning device of the comparative example is installed.

As shown in FIG. 4A, once another vehicle 71 that approaches from the left side enters the detection area 12L at the rear of the host vehicle 60 in which the warning device of the comparative example is installed, the millimeter-wave radar system 10L receives the reflected wave from another vehicle 71. Thus, the warning device of the comparative example detects another vehicle 71 that approaches from the left rear of the host vehicle 60. As a result, the driver of the host vehicle 60 in which the warning device of the comparative example is installed is informed of the approach of another vehicle 71 from the left rear of the host vehicle 60 by the warning through the speaker 40, the buzzer 41, the indicator 42, and the display device 43.

In addition, as shown in FIG. 4B, once another vehicle 72 that approaches from the right side enters the detection area 12R at the rear of the host vehicle 60 in which the warning device of the comparative example is installed, the millimeter-wave radar system 10R receives the reflected wave from another vehicle 72. Thus, the warning device of the comparative example detects another vehicle 72 that approaches from the right rear of the host vehicle 60. As a result, the driver of the host vehicle 60 in which the warning device of the comparative example is installed is informed of the approach of another vehicle 72 from the right rear of the host vehicle 60 by the warning through the speaker 40, the buzzer 41, the indicator 42, and the display device 43.

Furthermore, in FIG. 5, another vehicle 73 is parked in a parking space on the right of a parking space where the host vehicle 60 in which the warning device of the comparative example is installed is parked, and another vehicle 71 approaches from the left rear of the host vehicle 60. In such a case, once another vehicle 71 enters the detection area 12L, the millimeter-wave radar system 10L receives a reflected wave 81 that is reflected by another vehicle 71 through a path indicated by the dashed line, and the millimeter-wave radar system 10R receives a reflected wave 82 that is reflected by another vehicle 71 and is then reflected by a left side face of another vehicle 73 through a path indicated by the chain line. The path of the reflected wave 82 indicated by the chain line is multipath with respect to the path of the reflected wave 81 as an original path.

As a result, the warning device of the comparative example detects the approach of another vehicle 71G from the right rear of the host vehicle 60 immediately after detecting the approach of another vehicle 71 from the left rear of the host vehicle 60.

Another vehicle 71G in this case is a ghost that is generated when the reflected wave 82 reflected by another vehicle 71 is further reflected by the left side face of another vehicle 73 that is parked on the right of the host vehicle 60, and thus, a non-existent vehicle is faultily detected.

Such a ghost may also be detected when another vehicle 73 is parked on the right side of the host vehicle 60 with one or plural parking spaces being interposed therebetween. In addition, such a ghost may be detected when another vehicle 73 is parked in a parking space on the left of the host vehicle 60. Furthermore, such a ghost may be detected when there is a wall of a building or the like on the right or left of the host vehicle 60.

As described above, the warning device of the comparative example makes false detection of the ghost when another vehicle 73 is parked on the right or left of the host vehicle 60 or when the multipath is generated due to the wall of the building.

Another vehicle 71G that is detected as the ghost is detected as a vehicle that satisfies the condition of the same speed as another vehicle 71, the specified time difference by the multipath, the arrival direction that is substantially and linearly symmetrical to the center axis of the host vehicle 60, or the like.

When a second other vehicle that satisfies the same condition as the ghost actually exists, it is difficult to distinguish the second other vehicle from the ghost, and thus this may lead to degraded usability of the warning device.

On the contrary, for the warning device 100 of the embodiment, which will be described below, the degraded usability as described above is solved, and thus the usability thereof is improved.

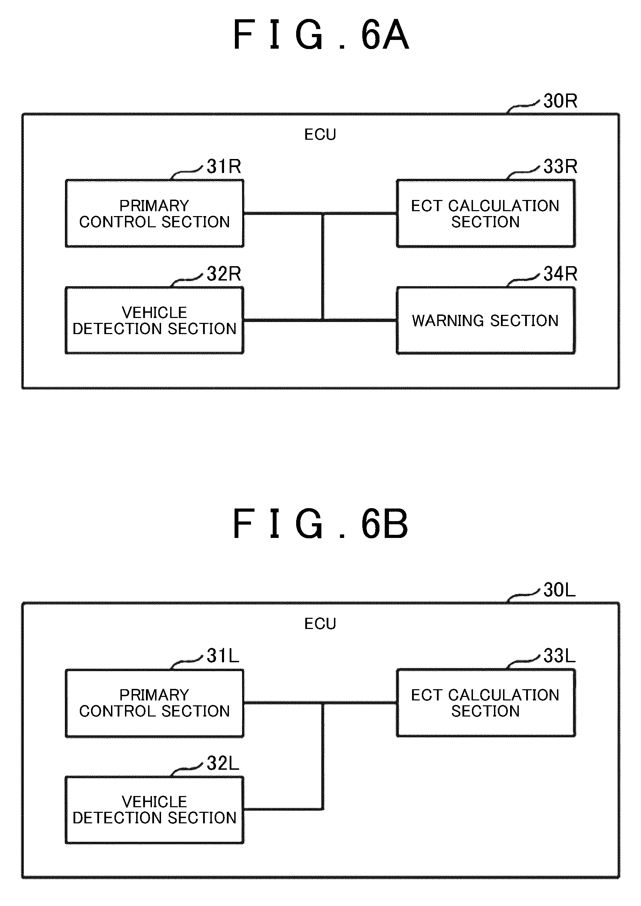

Next, the warning device 100 of the embodiment will be described by using FIG. 6A and FIG. 6B.

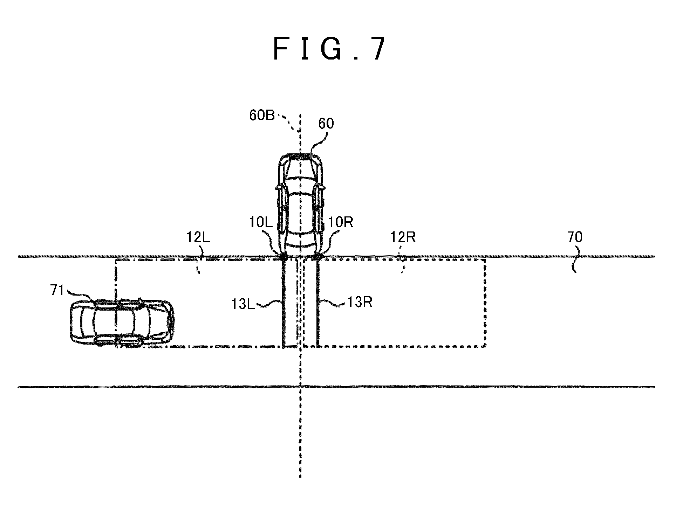

FIG. 6A is a view for showing a functional block that is included in the ECU 30R of the warning device of the embodiment. FIG. 6B is a view for showing a functional block that is included in the ECU 30L of the warning device of the embodiment. FIG. 7 is a view for showing a warning line that is used for calculation of an estimated crossing time.

When two other vehicles whose moving directions are different from each other are detected at the rear of the host vehicle 60 within a specified time difference, the warning device 100 of the embodiment extends the warning of a first other vehicle.

The warning is extended from a time at which a second other vehicle is detected to a time at which the estimated crossing time (ECT) with the second other vehicle ends, for example.

The ECU 30R includes a primary control section 31R, a vehicle detection section 32R, an ECT calculation section 33R, and a warning section 34R. The ECU 30L includes a primary control section 31L, a vehicle detection section 32L, and an ECT calculation section 33L.

The primary control section 31R is a processing section that controls overall internal processing of the ECU 30R and performs determination processing, which will be described below.

The vehicle detection section 32R detects presence or absence of another vehicle and an orientation of another vehicle with respect to the host vehicle on the basis of a signal input from the radar section 20R. The presence or absence of another vehicle is determined by determining moving one of the obstacles that are detected by the signal input from the radar section 20R as another vehicle. In addition, the orientation (θ) of another vehicle can be calculated by the DBF as described above.

Based on the signal input from the radar section 20R, the ECT calculation section 33R calculates a time that is taken until a trajectory of the host vehicle 60 crosses a trajectory of another vehicle in a case where the host vehicle 60 is reversed and another vehicle moves in the moving direction.

As shown in FIG. 7, the ECT calculation section 33R calculates a time required for a warning line 13R that virtually extends to the rear of the host vehicle 60 crosses another vehicle 71 that is located in the detection area 12R as the estimated crossing time (ECT).

The estimated crossing time (ECT) is calculated by dividing a distance between another vehicle 71 and an alarming line 13R by the relative speed between another vehicle 71 and the host vehicle 60.

The warning section 34R orders the speaker 40, the buzzer 41, the indicator 42, and the display device 43 to issue the warning when the primary control section 31R determines that the issuance of the warning is necessary. A duration to issue the warning corresponds to the estimated crossing time (ECT) that is calculated by the ECT calculation section 33R.

The primary control section 31L controls overall internal processing of the ECU 30L and transmits the presence or absence and the orientation of another vehicle, which are detected by the vehicle detection section 32L, and the estimated crossing time (ECT), which is calculated by the ECT calculation section 33R, to the primary control section 31R of the ECU 30R.

The vehicle detection section 32L detects the presence or absence of another vehicle and the orientation of another vehicle with respect to the host vehicle on the basis of a signal input from the radar section 20L. The presence or absence of another vehicle is determined by determining moving one of the obstacles that are detected by the signal input from the radar section 20L as another vehicle. In addition, the orientation (θ) of another vehicle can be calculated by the DBF as described above.

Based on the signal input from the radar section 20L, the ECT calculation section 33L calculates a time that is taken until the trajectory of the host vehicle 60 crosses a trajectory of another vehicle in a case where the host vehicle 60 is reversed and another vehicle moves in the moving direction.

As shown in FIG. 7, the ECT calculation section 33L calculates a time required for a warning line 13L that virtually extends to the rear of the host vehicle 60 crosses another vehicle 71 that is located in the detection area 12L as the estimated crossing time (ECT).

The estimated crossing time (ECT) is calculated by dividing a distance between another vehicle and an alarming line 13L by the relative speed between another vehicle and the host vehicle 60.

The estimated crossing time that is calculated by the ECT calculation section 33L is transmitted to the primary control section 31R and is used as the duration to issue the warning when the warning is issued on another vehicle that arrives from the left rear of the host vehicle 60.

After one of the millimeter-wave radar systems 10R, 10L detects the first other vehicle that approaches the host vehicle 60, the primary control section 31R determines whether the other one of the millimeter-wave radar systems 10R, 10L detects the second other vehicle. For example, after the millimeter-wave radar system 10R detects the first other vehicle that approaches the host vehicle 60 from the right rear, the primary control section 31R determines whether the millimeter-wave radar system 10L detects the second other vehicle that approaches the host vehicle 60 from the left rear. The primary control section 31R makes the determination of whether the second other vehicle that approaches the host vehicle 60 from the left rear is detected on the basis of information that is transmitted from the primary control section 31L in the ECU 30L of the millimeter-wave radar system 10L.

On the other hand, after the millimeter-wave radar system 10L detects the first other vehicle that approaches the host vehicle 60 from the left rear, the primary control section 31R determines whether the millimeter-wave radar system 10R detects the second other vehicle that approaches the host vehicle 60 from the right rear.

The primary control section 31R extends the issuance of the warning of the first other vehicle when the other of the millimeter-wave radar systems 10R, 10L detects the second other vehicle within the specified time after one of the millimeter-wave radar systems 10R, 10L detects the first other vehicle that approaches the host vehicle 60.

In this case, the primary control section 31R extends the warning of the first other vehicle from the time at which the second other vehicle is detected until the estimated crossing time (ECT) of the second other vehicle elapses.

In other words, the duration to extend the warning by the primary control section 31R corresponds to a duration that is obtained by subtracting a time at which the issuance of the warning of the first other vehicle ends in a case where the warning is not extended from a time that is obtained by adding the estimated crossing time (ECT) of the second other vehicle to the time at which the second other vehicle is detected.

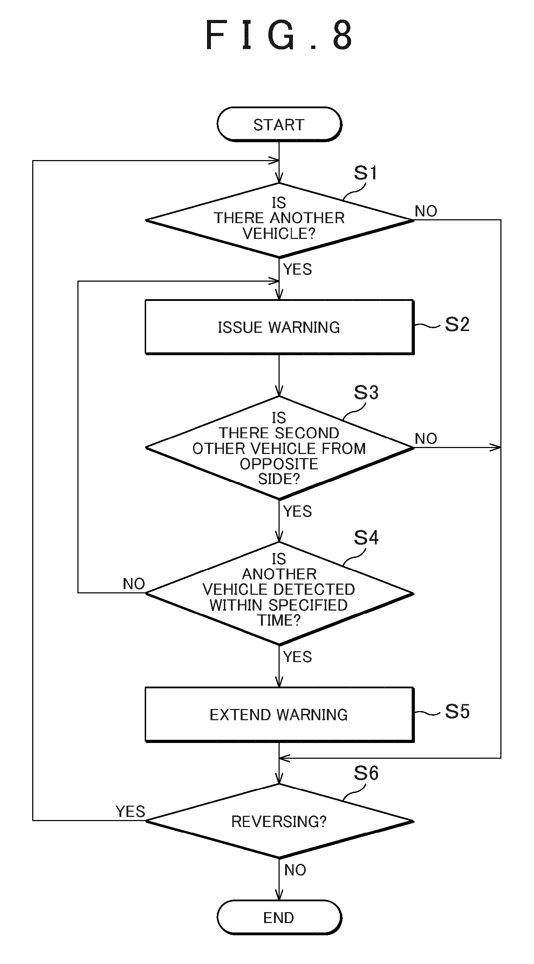

FIG. 8 is a flowchart for illustrating processing that is executed by the ECU 30R of the warning device of the embodiment. The processing in this flowchart is processing that is executed by the primary control section 31R of the ECU 30R in the warning device of the embodiment.

The primary control section 31R starts processing (START) when the host vehicle 60 starts being reversed from the parked state. The primary control section 31R recognizes that the host vehicle 60 starts being reversed from the parked state since the signal input from the shift lever position sensor 54 indicates "R" (REVERSE).

The primary control section 31R determines whether another vehicle is detected (a step S1). The detection of another vehicle can be performed on the basis of whether the detection signal is received from the radar section 20R or 20L.

If it is determined that another vehicle is detected (the step S1: YES), the primary control section 31R transmits a warning issuing command to the warning section 34R (a step S2). As a result, the warning section 34R orders the speaker 40, the buzzer 41, the indicator 42, and the display device 43 to issue the warning. The duration to issue the warning corresponds to the estimated crossing time (ECT) that is calculated by the ECT calculation section 33R or 33L.

Next, the primary control section 31R determines whether the other one of the millimeter-wave radar systems 10R, 10L detects the second other vehicle (a step S3). In other words, in the step S3, the primary control section 31R determines whether the millimeter-wave radar system (10R or 10L) that is on the opposite side of the right or left from another vehicle that has been detected in the step S1 detects the second other vehicle.

If the second other vehicle is detected in the opposite direction from the first other vehicle in the step S3 (the step S3: YES), the primary control section 31R determines whether the second other vehicle is detected within the specified time after the detection of the first other vehicle (a step S4).

The determination of the step S4 is made by calculating a difference between a detection time of the first other vehicle and a detection time of the second other vehicle.

If it is determined in the step S4 that the second other vehicle is detected within the specified time after the detection of the first other vehicle (the step S4: YES), the primary control section 31R extends the warning of the first other vehicle (a step S5).

In the step S5, the primary control section 31R extends the warning of the first other vehicle from the time at which the second other vehicle is detected until the estimated crossing time (ECT) of the second other vehicle that is calculated by the ECT calculation section 33R or 33L elapses.

In other words, the duration to extend the warning by the primary control section 31R corresponds to the duration that is obtained by subtracting the time at which the issuance of the warning of the first other vehicle ends in the case where the warning is not extended from the time that is obtained by adding the estimated crossing time (ECT) of the second other vehicle to the time at which the second other vehicle is detected.

Next, the primary control section 31R determines whether the host vehicle 60 is being reversed (a step S6). While the detection of another vehicle is continuously required if the host vehicle is being reversed, the detection of another vehicle is not required if the host vehicle is not being reversed. Thus, the determination of whether it is being reversed is made.

The primary control section 31R determines whether the host vehicle 60 is being reversed on the basis of whether the signal input from the shift lever position sensor 54 indicates "R" (reverse). Being reversed refers to a state in which a shift lever position is in "R" (reverse) and does not indicate that the host vehicle 60 is actually being reversed or not.

If the primary control section 31R determines that the host vehicle 60 is being reversed (the step S6: YES), the flow returns to the step S1, and the processing in the step S1 is executed. On the other hand, if the primary control section 31R determines that the host vehicle 60 is not being reversed (the step S6: NO), a series of the processing is terminated (END). For example, it is because there is no need to monitor another vehicle at the rear of the host vehicle 60 once the host vehicle 60 starts traveling forward, for example.

If another vehicle is not detected in the step S1 (the step S1: NO), the primary control section 31R proceeds with the flow to the step S6. This is to make a determination on whether the process should return to the step S1 to detect another vehicle again or the series of processing should be terminated by determining whether the host vehicle 60 keeps being reversed.

In addition, if the second other vehicle is not detected in the opposite direction from the first other vehicle in the step S3 (the step S3: NO), the primary control section 31R proceeds with the flow to the step S6. This is to make the determination on whether the process should return to the step S1 to detect another vehicle again or the series of processing should be terminated by determining whether the host vehicle 60 keeps being reversed.

Here, if the second other vehicle is detected from a same direction as the first other vehicle after the first other vehicle is detected in the step S1, the primary control section 31R makes a determination of NO in the step S3. As a result, if the host vehicle 60 keeps being reversed (the step S6: YES), the flow returns to the step S1, and the second other vehicle that is detected in the same direction as the first other vehicle is detected as the first other vehicle in the step S1.

Furthermore, if the primary control section 31R determines in the step S4 that the second other vehicle is not detected within the specified time after the detection of the first other vehicle, the flow returns to the step S2, and the warning issuing command is transmitted to the warning section 34R (the step S2). As a result, the warning section 34R orders the speaker 40, the buzzer 41, the indicator 42, and the display device 43 to issue the warning.

In a case where the second other vehicle is detected from the opposite side of the first other vehicle and another vehicle and where the second other vehicle is detected after the specified time elapses from the time at which the first other vehicle is detected, it is determined that the second other vehicle is not the ghost of the first other vehicle but the first other vehicle that approaches the host vehicle 60 independently of the first vehicle. Accordingly, the warning is issued as in the case where another vehicle is detected in the step S 1.

By the above, the series of processing is terminated.

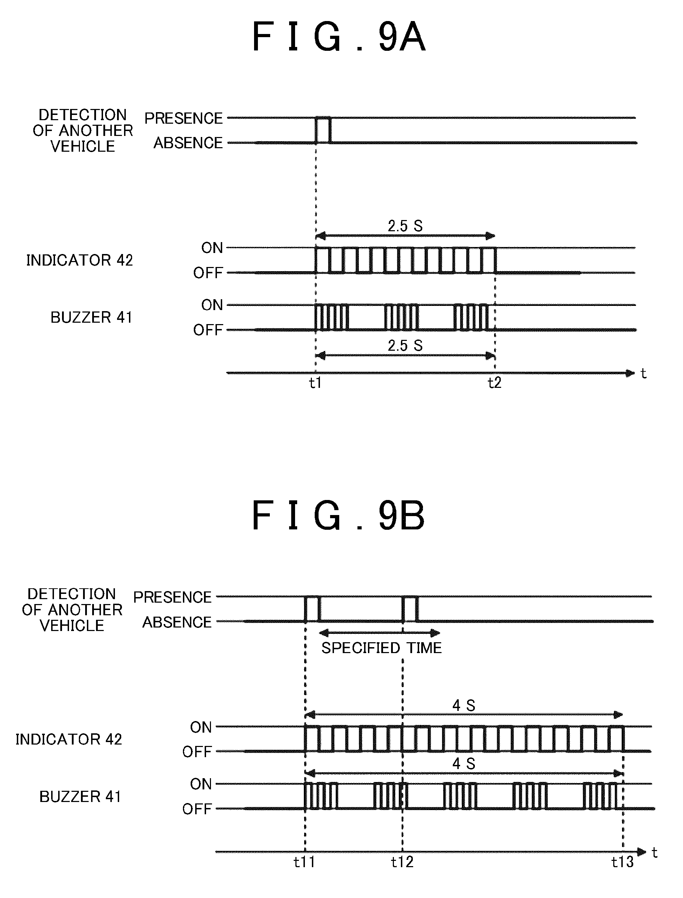

Next, an operation to extend the warning by the warning device 100 of the embodiment will be described by using FIG. 9A and FIG. 9B.

FIG. 9A and FIG. 9B are timing charts for showing the operation to extend the warning by the warning device 100 of the embodiment. FIG. 9A and FIG. 9B show presence or absence of the detection of another vehicle, on/off of the indicator 42, and on/off of the buzzer 41. A horizontal axis is a time axis, and the right direction is a positive direction of the time axis.

FIG. 9A shows an operation in a case where, after the first other vehicle is detected at a time t1, the second other vehicle is not detected.

When the first other vehicle is detected at the time t1, the primary control section 31R transmits the warning issuing command to the warning section 34R, thereby actuating the indicator 42 to be repeatedly turned on/off and also actuating the buzzer 41 to be repeatedly turned on/off. The duration to issue the warning corresponds to the estimated crossing time (ECT) that is calculated by the ECT calculation section 33R or 33L.

For example, if the estimated crossing time (ECT) is calculated to be 2.5 seconds in this case, the indicator 42 is repeatedly blinked for 2.5 seconds, and the buzzer 41 also repeatedly sounds for 2.5 seconds. The actuation of the indicator 42 is terminated at a time t2 that is 2.5 seconds after the time t1, and sounding of the buzzer 41 is also terminated at the time t2.

FIG. 9B shows an operation in a case where the second other vehicle is detected on the opposite side from the first other vehicle at a time t12 within a specified time from a time t11 at which the first other vehicle is detected.

When the first other vehicle is detected at the time t11, the primary control section 31R transmits the warning issuing command to the warning section 34R, thereby actuating the indicator 42 to be repeatedly turned on/off and also actuating the buzzer 41 to be repeatedly turned on/off. The duration to issue the warning corresponds to the estimated crossing time (ECT) of the first other vehicle that is calculated by the ECT calculation section 33R or 33L.

Here, the time t11 shown in FIG. 9B is the same time as the time t1 shown in FIG. 9A for convenience of the description, and the estimated crossing time (ECT) calculated for the first other vehicle is 2.5 seconds as in the case shown in FIG. 9A.

Next, when the second other vehicle is detected on the opposite side from the first other vehicle at the time t12, the primary control section 31R extends the warning of the first other vehicle. Accordingly, the indicator 42 continues to be blinked until a time t13, and the buzzer 41 also stops sounding at the time t13.

In other words, in this case, the warning is extended until the time t13 that is obtained by adding the estimated crossing time (ECT), which is calculated for the second other vehicle by the ECT calculation section 33R or 33L, to the time t12 at which the second other vehicle is detected. The estimated crossing time (ECT) that is calculated for the second other vehicle is a time between the time t12 and the time t13.

For example, since a time between the time t11 and the time t13 is 4 seconds, the blinking of the indicator 42 and the sounding of the buzzer 41 are extended for 1.5 seconds in comparison with the case shown in FIG. 9A.

As described above, the duration to extend the warning just as described corresponds to the duration that is obtained by subtracting the time t2 (see FIG. 9A) at which the issuance of the warning of the first other vehicle ends in a case where the warning is not extended from the time t13 that is obtained by adding the estimated crossing time (ECT) of the second other vehicle to the time t12 at which the second other vehicle is detected.

In other words, the duration to extend the warning corresponds to a duration from the time t2, which is obtained by adding the estimated crossing time of the first other vehicle to the time (t11 = t1) at which the first other vehicle is detected, to the time t13, which is obtained by adding the estimated crossing time (ECT) of the second other vehicle to the time t12 at which the second other vehicle is detected. This duration is the duration represented by t13 - t12. The extended warning is stopped at the time t13.

Thus, the estimated crossing time (ECT) of the second other vehicle that is calculated for the second other vehicle by the ECT calculation section 33R or 33L is a time that corresponds to a time difference between the time t12 and the time t13.

The specified time shown in FIG. 9B is a specified time used in the above step S4 after the first other vehicle is detected, and may be set to an appropriate value by an experiment or the like. Here, as an example, the specified time may be set to 2 seconds.

In addition, the specified time is set to a shorter time than the duration to issue the warning of the first other vehicle. This is to extend the warning of the second other vehicle that is detected on the opposite side from the first other vehicle while the warning of the first other vehicle is being issued.

As described above, according to the warning device 100 of the embodiment, when another vehicle is detected on the opposite side from the first other vehicle within the specified time after the first other vehicle is detected, the warning of the first other vehicle is extended. Thus, when the second other vehicle is not the ghost but the actual vehicle, it is possible to prevent in advance contact of the reversed host vehicle 60 with the second other vehicle.

In FIG. 9B, a mode in which both of the blinking of the indicator 42 and the sounding of the buzzer 41 are extended is described; however, the warning may only be extended in either one of the indicator 42 and the buzzer 41.

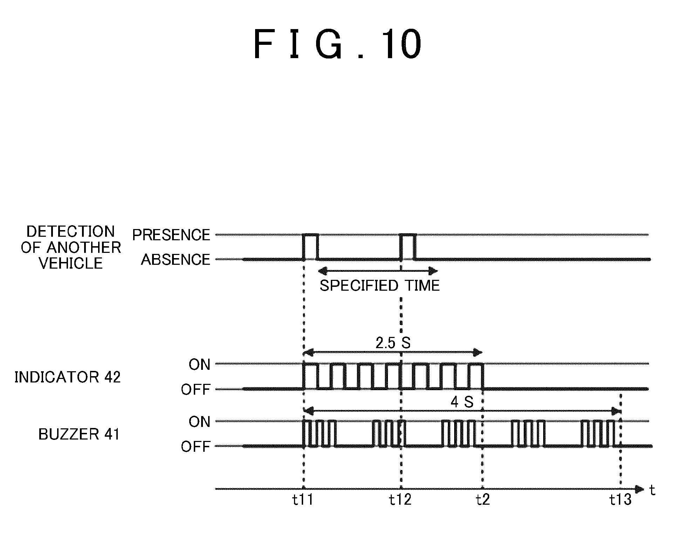

FIG. 10 is a timing chart for showing the operation to extend the warning by the warning device of a modified example of the embodiment.

As shown in FIG. 10, in a case where the first other vehicle is detected at the time t11 and the second other vehicle is detected on the opposite side from the first other vehicle at the time t12, the primary control section 31R extends the warning of the first other vehicle and orders the buzzer 41 to sound until the time t13.

In this case, while the blinking of the indicator 42 is not extended, the sounding of the buzzer 41 is extended for 1.5 seconds to inform the driver of the host vehicle 60 of the presence of the second other vehicle.

A mode in which the blinking of the indicator 42 and the sounding of the buzzer 41 are used to issue the warning has been described so far; however, in addition to the blinking of the indicator 42 and the sounding of the buzzer 41, the warning may be issued by output of the warning sound from the speaker 40, the lighting or blinking of the icon on the display device 43, and the like.

The warning may be issued by any one of the output of the warning sound from the speaker 40, the sounding of the buzzer 41, the blinking of the indicator 42, the lighting or blinking of the icon on the display device 43, and the like, or may be issued by arbitrarily combining any of them.

In addition, as for the indicator 42 or the display device 43, the approach from both of the right and left may be displayed to alert the driver to the arrival of another vehicle from the opposite side at a moment when the second other vehicle is detected at the time t12. For example, if the second other vehicle is detected at the time t12 while the first other vehicle approaches from the right rear of the host vehicle and the indicator 42 or the display device 43 informs the driver of the host vehicle 60 of the approach from the right side, the approach from the left side may be displayed in addition to the display of the approach from the right side.

In this case, after the second other vehicle is detected, a blinking pattern or the like of the indicator 42 or the display device 43 may be changed, for example.

Furthermore, regardless of presence or absence of the detection of the second other vehicle and regardless of the approaching direction of the first other vehicle, the approach from both of the right and left may be displayed at a moment when the first other vehicle is detected.

The indicator 42 may be positioned in the inner mirror, the outer mirror, the combination meter, or the like, and more specifically, may be attached to a mirror surface of the outer mirror, a housing of the outer mirror (for example, a turn signal), a display in the cabin, a pillar in the cabin (for example, A, B, or C pillar), an instrument panel, or the like.

The warning only on the direction of the first other vehicle may be extended, or the warning on the direction of the second other vehicle that can be the ghost may also be extended. If the plurality of second other vehicles, one or some of which can be the ghosts, are present, the warnings on all the directions may be extended.

Moreover, a mode in which the warning of the first other vehicle is extended from the time at which the second other vehicle is detected until the estimated crossing time (ECT) of the second other vehicle elapses has been described above.

However, the primary control section 31R may extend the warning of the first other vehicle from the time at which the estimated crossing time (ECT) of the second other vehicle is calculated by the ECT calculation section 33R or 33L until the estimated crossing time (ECT) of the second other vehicle elapses.

Alternatively, the warning may be extended by adding a specified spare time to the estimated crossing time (ECT). Such a spare time may be set to a value that is obtained by an experiment or the like, for example.

The duration to extend the warning is not limited to the estimated crossing time (ECT) but may be set to a duration that is obtained by an experiment or the like.

A description has been made so far on the warning device according to the exemplary embodiment of the present invention. However, the present invention is not limited to the embodiment that is specifically disclosed but can be modified or changed without departing from the claims.

DESCRIPTION OF THE REFERENCE NUMERALS AND SYMBOLS

| | |
|---|---|
| 100/ | WARNING DEVICE |
| 10R, 10L/ | MILLIMETER-WAVE RADAR SYSTEM |
| 11R, 11L/ | DETECTABLE AREA |
| 12R, 12L/ | DETECTION AREA |
| 20R/ | RADAR SECTION |
| 20L/ | RADAR SECTION |
| 30R, 30L/ | ECU |
| 31R, 31L/ | PRIMARY CONTROL SECTION |
| 32R, 32L/ | VEHICLE DETECTION SECTION |
| 33R, 33L/ | ECT CALCULATION SECTION |
| 34R/ | WARNING SECTION |
| 40/ | SPEAKER |
| 41/ | BUZZER |
| 42/ | INDICATOR |
| 43/ | DISPLAY DEVICE |
| 50/ | IGNITION SWITCH |
| 52/ | VEHICLE SPEED SENSOR |
| 54/ | SHIFT LEVER POSITION SENSOR |
| 56/ | ACCELERATOR PEDAL OPERATION AMOUNT SENSOR |
| 60/ | HOST VEHICLE |
| 60A/ | REAR END |
| 60B/ | CENTER AXIS |
| 70/ | TRAVELING LANE |
| 71, 71G, 72, 73/ | ANOTHER VEHICLE |

**Claims**

1.  A warning device comprising:

    a first detection section for detecting another vehicle approaching from right rear of a host vehicle;
    a second detection section for detecting another vehicle approaching from left rear of the host vehicle;
a warning section for issuing a warning to inform a driver of the host vehicle of approach of another vehicle; and
a control section to order the warning section to issue the warning when the first detection section or the second detection section detects another vehicle,
wherein the control section extends issuance of the warning of a first other vehicle in a case where one of the first detection section and the second detection section detects the first other vehicle and another of the first detection section and the second detection section thereafter detects a second other vehicle when the host vehicle is being reversed from a parked state.

2.  The warning device according to claim 1, wherein the control section extends the issuance of the warning of the first other vehicle in a case where the other of the first detection section and the second detection section thereafter detects the second other vehicle within a specified time after the one of the first detection section and the second detection section detects the first other vehicle.

3.  The warning device according to claim 2, wherein the specified time is set to a shorter time than a time to issue the warning of the first other vehicle.

4.  The warning device according to claim 1, wherein an extension duration to extend the warning is set on the basis of an estimated crossing time of the second other vehicle and the host vehicle.

5.  The warning device according to claim 1, wherein an extension duration is a duration from a time at which a first estimated crossing time of the first other vehicle and the host vehicle is added to a time at which the first other vehicle is detected to a time at which a second estimated crossing time of the second other vehicle and the host vehicle is added to a time at which the second other vehicle is detected.

6.  The warning device according to claim 1, wherein the issuance of the warning of the first other vehicle is output of a warning sound and lighting of a warning lamp, and
the issuance of the extended warning of the first other vehicle is either the output of the warning sound or the lighting of the warning lamp.

# F I G . 1

100

10L

MILLIMETER-WAVE
RADAR SYSTEM

30L

ECU

20L

RADAR SECTION

10R

MILLIMETER-WAVE
RADAR SYSTEM

30R

ECU

20R

RADAR SECTION

50

IGNITION SWITCH

52

VEHICLE
SPEED SENSOR

54

SHIFT LEVER
POSITION SENSOR

56

ACCELERATOR
PEDAL OPERATION
AMOUNT SENSOR

40 SPEAKER

41 BUZZER

42 INDICATOR

43 DISPLAY SECTION

# FIG.2

# FIG.3

# FIG.4A

# FIG.4B

# F I G . 5

# F I G . 6A

~30R

ECU

~31R

PRIMARY
CONTROL SECTION

~33R

ECT CALCULATION
SECTION

~32R

VEHICLE
DETECTION SECTION

~34R

WARNING SECTION

# F I G . 6B

~30L

ECU

~31L

PRIMARY
CONTROL SECTION

~33L

ECT CALCULATION
SECTION

~32L

VEHICLE
DETECTION SECTION

# FIG.7

# FIG.8

```
              ┌─────────────┐
              │    START    │
              └─────────────┘
                     │
                     ▼        S1
              ╱─────────────╲        NO
             ╱      IS       ╲──────────────┐
            ╱ THERE ANOTHER   ╲             │
            ╲    VEHICLE?     ╱             │
             ╲───────────────╱              │
                     │ YES                  │
                     ▼                      │
         ┌──────────────────────┐          │
         │    ISSUE WARNING     │ ～ S2     │
         └──────────────────────┘          │
                     │                      │
                     ▼        S3            │
              ╱───────────────╲     NO      │
             ╱       IS        ╲────────────┼──►
            ╱  THERE SECOND     ╲           │
           ╱ OTHER VEHICLE FROM  ╲          │
           ╲     OPPOSITE        ╱          │
            ╲      SIDE?        ╱           │
             ╲────────────────╱             │
                     │ YES                  │
                     ▼        S4            │
              ╱───────────────╲             │
     NO      ╱       IS        ╲            │
   ◄─────────╲    ANOTHER      ╱            │
             ╱ VEHICLE DETECTED ╲           │
             ╲ WITHIN SPECIFIED ╱           │
              ╲     TIME?      ╱            │
               ╲─────────────╱              │
                     │ YES                  │
                     ▼                      │
         ┌──────────────────────┐          │
         │    EXTEND WARNING    │ ～ S5     │
         └──────────────────────┘          │
                     │                      │
                     ▼◄─────────────────────┘
                              S6
              ╱───────────────╲
   YES       ╱                 ╲
   ◄─────────╲   REVERSING?    ╱
             ╲                 ╱
              ╲───────────────╱
                     │ NO
                     ▼
              ┌─────────────┐
              │     END     │
              └─────────────┘
```

# F I G . 9A

DETECTION OF ANOTHER VEHICLE

PRESENCE

ABSENCE

INDICATOR 42

ON

OFF

2.5 S

BUZZER 41

ON

OFF

2.5 S

t1          t2          t

# F I G . 9B

DETECTION OF ANOTHER VEHICLE

PRESENCE

ABSENCE

SPECIFIED TIME

INDICATOR 42

ON

OFF

4 S

BUZZER 41

ON

OFF

4 S

t11          t12          t13          t

# F I G . 10

DETECTION OF ANOTHER VEHICLE — PRESENCE / ABSENCE

SPECIFIED TIME

2.5 S

INDICATOR 42 — ON / OFF

4 S

BUZZER 41 — ON / OFF

t11    t12    t2    t13    t

## INTERNATIONAL SEARCH REPORT

| | International application No. |
|---|---|
| | PCT/JP2012/053160 |

### A. CLASSIFICATION OF SUBJECT MATTER
*G08G1/16*(2006.01)i

According to International Patent Classification (IPC) or to both national classification and IPC

### B. FIELDS SEARCHED

Minimum documentation searched (classification system followed by classification symbols)
G08G1/16

Documentation searched other than minimum documentation to the extent that such documents are included in the fields searched
Jitsuyo Shinan Koho        1922–1996   Jitsuyo Shinan Toroku Koho   1996–2012
Kokai Jitsuyo Shinan Koho   1971–2012   Toroku Jitsuyo Shinan Koho   1994–2012

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | US 2010/0271237 A1  (Eric L.Reed),<br>28 October 2010 (28.10.2010),<br>entire text<br>(Family: none) | 1–6 |
| A | JP 2003-306105 A  (Mitsubishi Motors Corp.),<br>28 October 2003 (28.10.2003),<br>entire text<br>(Family: none) | 1–6 |
| A | JP 2005-348558 A  (Toyota Motor Corp.),<br>15 December 2005 (15.12.2005),<br>entire text<br>(Family: none) | 1–6 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 March, 2012 (14.03.12) | 27 March, 2012 (27.03.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006191610 A